# EUROPÄISCHE PATENTANMELDUNG

(11) **EP 4 378 296 A1**
(43) Veröffentlichungstag der Anmeldung: **05.06.2024**
(21) Anmeldenummer: 22210607.2
(22) Anmeldetag: 30.11.2022
(51) Int. Cl.: A01D 34/13

(54) **MÄHMESSERVORRICHTUNG**

(71) Anmelder: Wepfer Technics AG, 8450 Andelfingen (CH)
(72) Erfinder: Wepfer, Hans, 8471 Berg-Dägerlen (CH)
(74) Vertreter: Keller Schneider Patent- und Markenanwälte AG

(57) **Zusammenfassung**

Die Erfindung betrifft eine Mähmesservorrichtung (100) mit (i) einem Doppelmesser-Schneidsystem (111), wobei das Doppelmesser-Schneidsystem (111) ein oberes Schneidmesser (140) und ein unteres Schneidmesser (180) aufweist, welche translatorisch relativ zueinander bewegbar ausgebildet sind, wobei das obere Schneidmesser (140) und das untere Schneidmesser (180) jeweils mehrere Klingenelemente (145) und einen Messerrücken (144,184) aufweist, wobei die Klingenelemente (145) über den Messerrücken (144,183) miteinander verbunden ausgebildet sind und im Wesentlichen in einer Messerebene (150) angeordnet sind, und (ii) einem Messerbalken (110), der in Richtung einer zur Messerebene (150) orthogonalen Achse (170) eine erste Ausdehnung (112) aufweist und der dazu ausgebildet ist, das Doppelmesser-Schneidsystem (111) zu halten, wobei zwischen dem Messerbalken (110) und dem Doppelmesser-Schneidsystem (111) ein Spalt (160) angeordnet ist, wobei ein Abschnitt des Messerrückens (144, 184) an den Spalt (160) angrenzt, wobei der an den Spalt (160) angrenzende Abschnitt des Messerrückens (144, 184) in Richtung der orthogonalen Achse (170) gebogen ist.

## Beschreibung

### Technisches Gebiet

Die Erfindung betrifft eine Mähmesservorrichtung mit einem Doppelmesser-Schneidsystem, wobei das Doppelmesser-Schneidsystem ein oberes Schneidmesser und ein unteres Schneidmesser aufweist.

### Stand der Technik

Die Druckschrift EP3881663B1 betrifft eine Mähmesservorrichtung mit einem Doppelmesser-Schneidsystem mit einem oberen und einem unteren Schneidmesser, welche jeweils mehrere etwa dreiecksförmige Klingenelemente aufweisen. Die Klingenelemente des oberen Schneidmessers und des unteren Schneidmessers sind jeweils über einen Messerrücken integral miteinander verbunden. Die zwei Messerrücken sind durch einen Spalt von einem Messerbalken getrennt, der mittels Haltevorrichtungen mit dem Doppelmesser-Schneidsystem verbunden ist. Sowohl das obere Schneidmesser als auch das untere Schneidmesser sind flach ausgebildet. Zur Stabilisierung des Doppelmesser-Schneidsystems sind zusätzliche Verstärkungen an den Schneidmessern angebracht, beispielsweise im Verbindungsbereich mit einem Messerkopf, der eine von einem seitlichen Antrieb bereitgestellte Kraft auf das obere Schneidmesser leitet, um die Schneidmesser relativ zueinander zu bewegen.

Ein Nachteil der im Stand der Technik bekannten Mähmesservorrichtung liegt darin, dass sich Schnittgut im Spalt zwischen dem Doppelmesser-Schneidsystem und dem Messerbalken verfangen und festsetzen kann, wodurch eine Lebensdauer der Mähmesservorrichtung üblicherweise verkürzt wird. Ein weiterer Nachteil im Stand der Technik ist, dass sich Schnittgut auch an den zusätzlichen Verstärkungen festsetzen kann; weiterhin führen diese zu einem insgesamt schwereren Aufbau dieser bekannten Mähmesservorrichtung, wobei dies einen erhöhten Leistungsbedarf zur Folge hat. Ein zusätzlicher Nachteil im Stand der Technik ist, dass die etwa dreiecksförmigen Klingenelemente bewirken, dass Schnittgut teilweise schräg geschnitten wird, wodurch sich wiederum eine erhöhte Menge an Schnittgut an der Mähmesservorrichtung festsetzen kann.

### Darstellung der Erfindung

Aufgabe der Erfindung ist es, eine Mähmesservorrichtung bereitzustellen, welche zumindest einige Nachteile der aus dem Stand der Technik bekannten Mähmesservorrichtung behebt.

Die Lösung der Aufgabe ist durch die Merkmale des Anspruchs 1 definiert. Die Erfindung betrifft eine Mähmesservorrichtung mit (i) einem Doppelmesser-Schneidsystem, wobei das Doppelmesser-Schneidsystem ein oberes Schneidmesser und ein unteres Schneidmesser aufweist, welche translatorisch relativ zueinander bewegbar ausgebildet sind, wobei das obere Schneidmesser und das untere Schneidmesser jeweils mehrere Klingenelemente und einen Messerrücken aufweist, wobei die Klingenelemente über den Messerrücken miteinander verbunden ausgebildet sind und im Wesentlichen in einer Messerebene angeordnet sind, und (ii) einem Messerbalken, der in Richtung einer zur Messerebene orthogonalen Achse eine erste Ausdehnung aufweist und der dazu ausgebildet ist, das Doppelmesser-Schneidsystem zu halten, wobei zwischen dem Messerbalken und dem Doppelmesser-Schneidsystem ein Spalt angeordnet ist, wobei ein Abschnitt des Messerrückens an den Spalt angrenzt, wobei der an den Spalt angrenzende Abschnitt des Messerrückens in Richtung der orthogonalen Achse gebogen ist.

Eine Biegung des an den Spalt angrenzenden Abschnitts des Messerrückens des oberen Schneidmessers und des Messerrückens des unteren Schneidmessers verbessert die Stabilität der beiden Schneidmesser. Durch die erfindungsgemässe Biegung der beiden Schneidmesser werden keine zusätzlichen Verstärkungen, an denen sich Schnittgut festsetzen kann, zur Stabilisierung des Doppelmesser-Schneidsystems benötigt, da die Biegefestigkeit der beiden Schneidmesser verbessert wird. Die in Richtung der orthogonalen Achse an den Spalt angrenzenden gebogenen Abschnitte des Messerrückens des oberen und des unteren Schneidmessers schirmen den Spalt zwischen Messerbalken und Doppelmesser-Schneidsystem weiterhin so ab, dass weniger Schnittgut, welches sich bei einem Einsatz der erfindungsgemässen Mähmesservorrichtung von den Klingenelementen in Richtung des Messerbalkens bewegt, in den Spalt gelangt und sich dort festsetzt. Die erfindungsgemässe Mähmesservorrichtung weist damit, verglichen mit aus dem Stand der Technik bekannten Mähmesservorrichtungen, weniger Bauteile auf und verringert gleichzeitig eine Festsetzung von Schnittgut, wodurch die Lebensdauer der erfindungsgemässen Mähmesservorrichtung im Vergleich zu Stand-der-Technik-Mähmesservorrichtungen erhöht wird.

Die Messerebene verläuft zwischen dem oberen Schneidmesser und dem unteren Schneidmesser und berührt zumindest die Klingenelemente der beiden Schneidmesser, d.h. die Klingenelemente der beiden Schneidmesser grenzen direkt an die Messerebene an. Die Klingenelemente sind zumindest auf einer Unterseite im Falle des oberen Schneidmessers und auf einer Oberseite im Falle des unteren Schneidmessers flach ausgebildet, wobei sich die Unter- und Oberseite der Klingenelemente bei einem Einsatz der erfindungsgemässen Mähmesservorrichtung berühren. Die Messerebene berührt die Klingenelemente daher flächig.

In einer Ausführungsform der erfindungsgemässen Mähmesservorrichtung ist der Messerbalken auf Höhe des Doppelmesser-Schneidsystems, insbesondere symmetrisch um die Messerebene herum, angeordnet, und/oder der an den Spalt angrenzende Abschnitt des Messerrückens des oberen Schneidmessers und der an den Spalt angrenzende Abschnitt des Messerrückens des unteren Schneidmessers sind im Wesentlichen symmetrisch im Hinblick auf die Messerebene gebogen.

Eine Positionierung des Messerbalkens auf Höhe des Doppelmesser-Schneidsystems ermöglicht eine gute Abschirmung des Spalts zwischen dem Messerbalken und dem Doppelmesser-Schneidsystem durch die gebogenen Abschnitte der beiden Schneidmesser. Vorzugsweise sind die Abschnitte des Messerrückens des unteren Schneidmessers und des oberen Schneidmessers symmetrisch im Hinblick auf die Messerebene gebogen: der an den Spalt grenzende Abschnitt des Messerrückens des oberen Schneidmessers ist insbesondere nach oben gebogen, d.h. von der Messerebene weg, und der an den Spalt grenzende Abschnitt des Messerrückens des unteren Schneidmessers ist insbesondere nach unten gebogen, d.h. ebenfalls von der Messerebene weg.

In einer weiteren Ausführungsform der erfindungsgemässen Mähmesservorrichtung ist der an den Spalt angrenzende Abschnitt des Messerrückens entlang einer gesamten Breite des Doppelmesser-Schneidsystems, insbesondere gleichförmig, gebogen.

Der Begriff Breite bezieht sich auf eine Ausdehnung des Doppelmesser-Schneidsystems in eine Richtung, die entlang des Spalts verläuft. Der an den Spalt angrenzende Abschnitt des Messerrückens kann vorzugsweise entlang dieser gesamten Breite gebogen sein, wodurch die Stabilität des Schneidmessers weiter verbessert werden kann. Insbesondere kann die Art und das Ausmass der Biegung entlang der ganzen Breite gleichförmig, d.h. gleich ausgeprägt sein: hierdurch kann das Vorkommen lokaler Schwachstellen, die z.B. auf Grund unzureichender lokaler Biegung entstehen können, verhindert werden. Weiterhin kann ein gleichförmig gebogener Abschnitt des Messerrückens auch einfacher gefertigt werden.

In einer weiteren Ausführungsform der erfindungsgemässen Mähmesservorrichtung ist der an den Spalt angrenzende Abschnitt des Messerrückens so gebogen, dass ein Abstand zwischen einem überstehenden Teil des gebogenen Messerrückens des oberen Schneidmessers und einem überstehenden Teil des gebogenen Messerrückens des unteren Schneidmessers in Richtung der orthogonalen Achse zumindest der ersten Ausdehnung des Messerbalkens entspricht.

Der Messerrücken kann so gebogen sein, dass der an den Spalt angrenzende Teil des Messerbalkens, von den Klingenelementen in Richtung des Messerbalkens auf Höhe der Messerebene blickend, von den gebogenen Abschnitten des Messerrückens der beiden Schneidmesser vollständig verdeckt ist. Die gebogenen Messerrücken können eine spoilerartige Wirkung entfalten, da Schnittgut im Falle des oberen Schneidmessers nach oben und im Falle des unteren Schneidmessers nach unten abgelenkt wird und sich nach Verlassen der gebogenen Abschnitte des Messerrückens ober- bzw. unterhalb des Messerbalkens befindet, wodurch weniger Schnittgut in den Spalt zwischen dem Doppelmesser-Schneidsystem und dem Messerbalken gelangt und sich dort festsetzt.

In einer weiteren Ausführungsform der erfindungsgemässen Mähmesservorrichtung ist der gebogene Abschnitt des Messerrückens flach ausgebildet und weist zur Messerebene einen Biegewinkel zwischen 5° und 45°, vorzugsweise 15°, auf.

Zur Erzeugung des gebogenen Messerrückens können unterschiedliche Biegeverfahren eingesetzt werden, d.h. sowohl Biegeumformen mit geradliniger Werkzeugbewegung als auch Biegeumformen mit drehender Werkzeugbewegung. Biegewinkel oder Biegeradius können an eine Ausdehnung des Spalts zwischen dem Doppelmesser-Schneidsystem und dem Messerbalken und/oder an die erste Ausdehnung des Messerbalkens angepasst sein.

In einer weiteren Ausführungsform der erfindungsgemässen Mähmesservorrichtung weist jedes Klingenelement zwei strikt konvex ausgebildete Begrenzungen mit daran angeordneten Schneidkanten auf, wobei sich die Schneidkante eines Klingenelements und die gegenüberliegende Schneidkante eines benachbarten Klingenelements kontinuierlich über den Messerrücken erstrecken.

Da die Klingenelemente im Wesentlichen flach ausgebildet sind, können ihre seitlichen Begrenzungen, von oberhalb des Klingenelements auf das Klingenelement blickend, als eindimensionale Linien in einer zweidimensionalen Ebene angesehen werden. Zwei, insbesondere seitliche, Begrenzungen des Klingenelements können dabei strikt konvex ausgebildet sein, wobei der Begriff strikt konvex bedeutet, dass eine Verbindungsgerade zwischen zwei beliebigen Punkten der jeweiligen strikt konvexen Begrenzung vollständig oberhalb dieser strikt konvexen Begrenzung liegt. An diesen zwei strikt konvex ausgebildeten Begrenzungen sind Schneidkanten angeordnet. Die Schneidkante eines Klingenelements kann mit der gegenüberliegenden Schneidkante eines benachbarten Klingenelements verbunden sein und sich kontinuierlich über den Messerrücken erstrecken: hierdurch kann eine Auflagefläche, an der sich Schnittgut festsetzen kann, verringert werden.

In einer weiteren Ausführungsform der erfindungsgemässen Mähmesservorrichtung ist jedes Klingenelement um eine Mittellinie, die parallel zu einer Richtung von einer Klingenspitze des Klingenelements zum Messerbalken verläuft, herum symmetrisch aufgebaut, wobei die zwei strikt konvex ausgebildeten Begrenzungen im Bereich der Klingenspitze im Wesentlichen parallel zur Mittellinie verlaufen.

In der Nähe der Klingenspitze, die abgeflacht ausgebildet sein kann, können die zwei strikt konvex ausgebildeten Begrenzungen im Wesentlichen parallel zur Mittellinie, die eine Symmetrieachse für das Klingenelement darstellen kann, verlaufen. In der Nähe eines Kontaktpunks zwischen einer strikt konvexen Begrenzung eines Klingenelements und einer gegenüberliegenden strikt konvexen Begrenzung eines benachbarten Klingenelements können die strikt konvexe Begrenzung und die gegenüberliegende strikt konvexe Begrenzung im Wesentlichen orthogonal zur Mittellinie verlaufen. Die Mittellinien unterschiedlicher Klingenelemente können parallel zueinander verlaufen. Ein Klingenelement des oberen Schneidmessers und ein Klingenelement des unteren Schneidmessers können dann, bei hinreichend kleiner Distanz zwischen ihren jeweiligen Mittellinien, einen kleinen Schneidwinkel ausbilden. Vorteilhafterweise wird so erreicht, dass Schnittgut aufrecht geschnitten wird und sich so weniger an der Mähmesservorrichtung festsetzt. Dies begünstigt zusätzlich die Wirkung der spoilerartig gebogenen Schneidmesser, da Schnittgut im Falle des oberen Schneidmessers nach oben und im Falle des unteren Schneidmessers nach unten abgelenkt wird und sich nach Verlassen der gebogenen Abschnitte des Messerrückens ober- bzw. unterhalb des Messerbalkens befindet. Je aufrechter das Schnittgut geschnitten wird, desto besser kann dieses abgeleitet werden, wodurch weniger Schnittgut in den Spalt zwischen dem Doppelmesser-Schneidsystem und dem Messerbalken gelangt und sich dort festsetzt.

In einer weiteren Ausführungsform der erfindungsgemässen Mähmesservorrichtung sind die Schneidkanten flach ausgebildet. Die Schneidkanten können flächig ausgebildet sein und ein lineares an- bzw. absteigendes Profil aufweisen.

In einer weiteren Ausführungsform der erfindungsgemässen Mähmesservorrichtung ist der Abstand zwischen dem überstehenden Teil des Messerrückens des oberen Schneidmessers und dem überstehenden Teil des Messerrückens des unteren Schneidmessers um jeweils mindestens 5 mm, vorzugsweise 15 mm, grösser als die erste Ausdehnung.

In einer weiteren Ausführungsform der erfindungsgemässen Mähmesservorrichtung weist die Mähmesservorrichtung einen Messerkopf zum Einleiten einer Antriebsbewegung eines seitlichen Antriebs auf das Doppelmesser-Schneidsystem auf, wobei der Messerkopf an einem restlichen Abschnitt, der ausserhalb des gebogenen Abschnitts des Messerrückens liegende Abschnitte des Messerrückens umfasst, unmittelbar mit dem oberen Schneidmesser fest verbunden ist, und insbesondere ohne zusätzliche Verstärkung fest verbunden ist.

Durch die erfindungsgemässe Biegung des Messerrückens kann auf eine zusätzliche Verstärkung an einer Verbindungsstelle des Messerkopfs mit dem oberen Schneidmesser verzichtet werden, da der erfindungsgemäss gebogene Messerrücken zu einer erhöhten Stabilität führt. Der Messerkopf kann ausserhalb des gebogenen Abschnitts des Messerrückens am Messerrücken befestigt werden.

Der Messerkopf zum Einleiten einer Antriebsbewegung eines seitlichen Antriebs auf das Doppelmesser-Schneidsystem kann alternativ auch unmittelbar, d.h., ohne zusätzliche Verstärkungen, an dem gebogenen Abschnitt des Messerrückens des oberen Schneidmessers angebracht sein.

In einer weiteren Ausführungsform der erfindungsgemässen Mähmesservorrichtung weist der Messerrücken, in Richtung von einer Klingenspitze des Klingenelements zum Messerbalken, eine Ausdehnung von wenigstens 10 mm, vorzugsweise 33 mm, auf, wobei der gebogene Abschnitt des Messerrückens, in der Richtung von einer Klingenspitze des Klingenelements zum Messerbalken, eine Ausdehnung von wenigstens 5 mm, vorzugsweise der Hälfte der Ausdehnung des Messerrückens, aufweist.

Der gebogene Abschnitt des Messerrückens reduziert die Auflagefläche zwischen dem oberen Schneidmesser und dem unteren Schneidmesser am Messerrücken. Dadurch wird der Anpressdruck zwischen dem oberen Schneidmesser und dem unteren Schneidmesser im Bereich der verbleibenden Auflagefläche des Messerrückens erhöht. Dies bringt zusätzliche Vorteile mit sich: durch den erhöhten Anpressdruck kann weniger Schnittgut und Schmutz zwischen das obere Schneidmesser und das untere Schneidmesser geraten, wodurch die Einsatzdauer der Mähmesservorrichtung gesteigert werden kann. Falls Schnittgut und Schmutz dennoch zwischen das obere Schneidmesser und das untere Schneidmesser gerät, so wird es aufgrund der reduzierten Tiefe, welche durch die gebogenen Abschnitte des Messerrückens begründet ist, schneller wieder in Richtung des Messerbalkens entfernt.

In einer weiteren Ausführungsform der erfindungsgemässen Mähmesservorrichtung ist das obere Schneidmesser und/oder das untere Schneidmesser einstückig, insbesondere aus einem Flachstahl gefertigt und anschliessend gebogen, ausgebildet. Beispielsweise ist das obere Schneidmesser und/oder das untere Schneidmesser einstückig, insbesondere aus einem Flachstahl gefertigt anschliessend gebogen, zumindest 1m und maximal 6 m breit ausgebildet. Der Begriff Breite bezieht sich auf eine Ausdehnung des Doppelmesser-Schneidsystems in eine Richtung, die entlang des Spalts verläuft.

In einer weiteren Ausführungsform der erfindungsgemässen Mähmesservorrichtung sind die restlichen Abschnitte des oberen Schneidmessers und des unteren Schneidmessers ausserhalb der gebogenen Abschnitte des Messerrückens im Wesentlichen flach ausgebildet.

In einer weiteren Ausführungsform der erfindungsgemässen Mähmesservorrichtung sind keine weiteren zusätzlichen Verstärkungen am oberen Schneidmesser und/oder am unteren Schneidmesser angebracht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Aufsicht auf ein erfindungsgemässes Doppelmesser-Schneidsystem,
- Fig. 2: eine schematische Schnittansicht einer erfindungsgemässen Mähmesservorrichtung, und
- Fig. 3: eine perspektivische Ansicht einer erfindungsgemässen Mähmesservorrichtung.

Grundsätzlich sind in den Figuren gleiche Teile mit gleichen Bezugszeichen versehen.

### Wege zur Ausführung der Erfindung

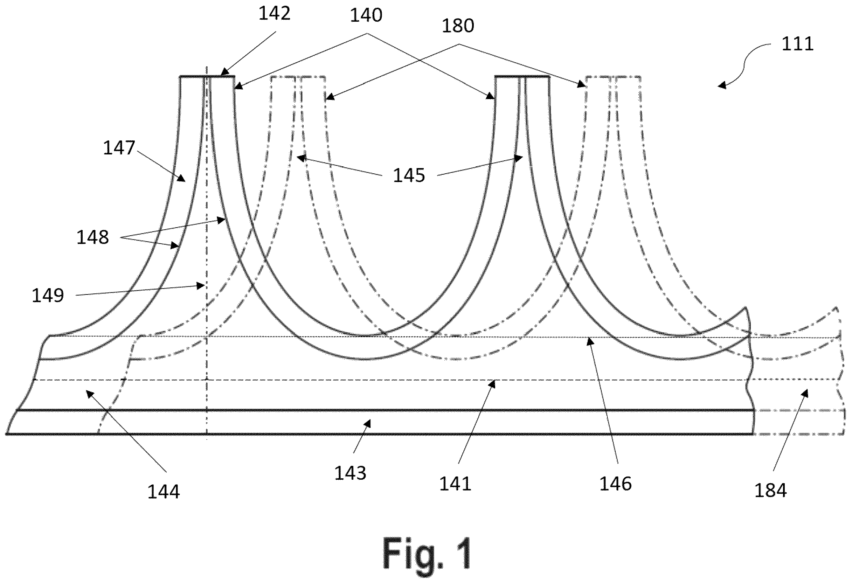

**Fig. 1** zeigt eine schematische Aufsicht auf ein erfindungsgemässes Doppelmesser-Schneidsystem 111. Das Doppelmesser-Schneidsystem 111 weist ein oberes Schneidmesser 140 und ein unteres Schneidmesser 180 auf, die translatorisch zueinander bewegbar sind. Das obere Schneidmesser 140 und das untere Schneidmesser 180 umfassen jeweils mehrere Klingenelemente 145, die jeweils zwei strikt konvexe Begrenzungen 148 mit daran angeordneten Schneidkanten 147 aufweisen. Die Klingenelemente 145 sind jeweils um eine Mittellinie 149 herum symmetrisch ausgebildet, wobei die Begrenzungen 148 in der Nähe der Klingenspitze 142 bzw. der Mittellinie 149 annähernd parallel zur Mittellinie 149 verlaufen und in einem Bereich zwischen zwei benachbarten Klingenelementen 145 einen grösseren Winkel zur Mittellinie 149 ausbilden. Die Klingenelemente 145 des oberen Schneidmessers 140 sind über einen Messerrücken 144 miteinander verbunden, und die Klingenelemente 145 des unteren Schneidmessers 180 sind ebenfalls über einen Messerrücken 184 miteinander verbunden, wobei sich der Messerrücken 144,184 zwischen einer ersten Messerrückengrenzlinie 146 und einer Endfläche 143 erstreckt.

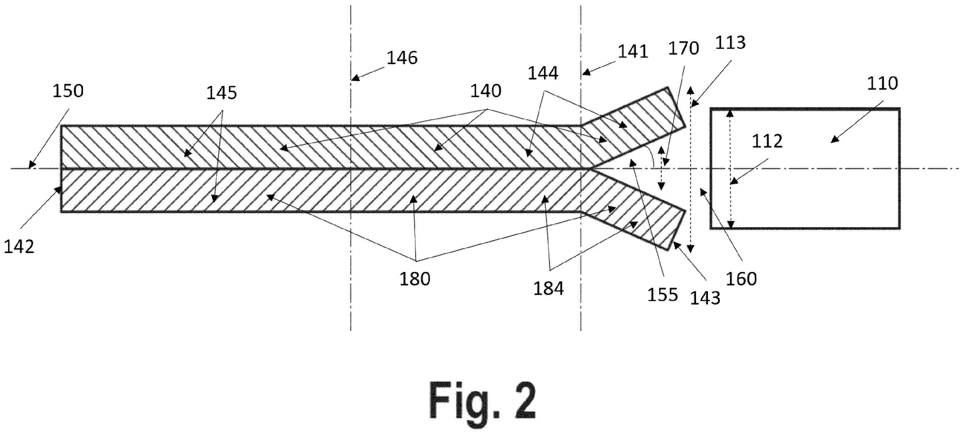

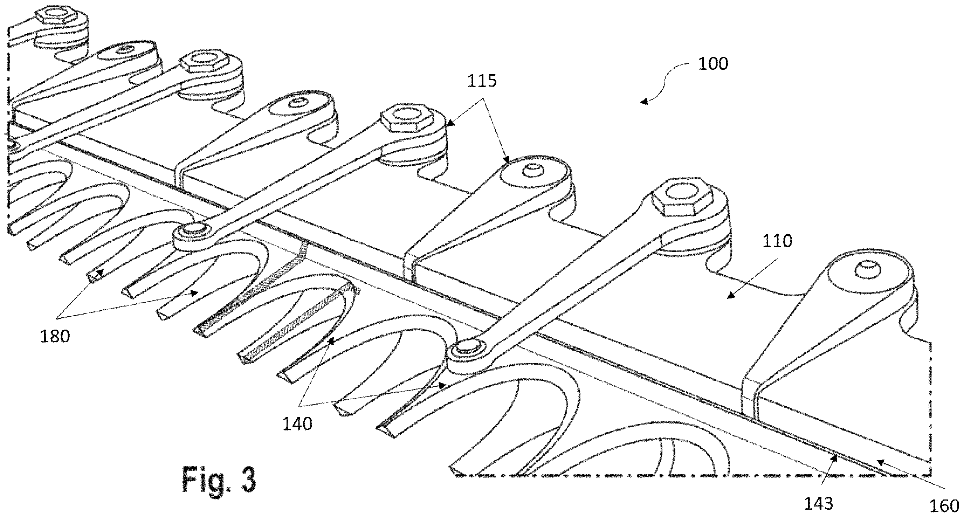

Der Messerrücken 144,184 ist in einem an einen Spalt 160 zwischen dem Doppelmesser-Schneidsystem 111 und einem Messerbalken 110 (dargestellt in **Fig. 2** und **Fig. 3**) angrenzenden Abschnitt gebogen. Die in **Fig. 1** dargestellten zwei unteren Linien zeigen eine Aufsicht auf Endflächen 143 des gebogenen Messerrückens 144,184, und die darüber eingezeichnete Linie 141 zeigt schematisch den Beginn der gebogenen Abschnitte der Messerrücken 144,184 des oberen 140 und des unteren 180 Schneidmessers, wobei letztere Linie 141 beispielsweise eine Biegekante darstellen kann, an der der Messerrücken 144,184 gebogen wird. Der an den Spalt 160 angrenzende Abschnitt des Messerrückens 144,184 kann auch mittels Walzen gebogen werden, wobei andere Arten des Biegens und Umformens auch möglich sind.

**Fig. 2** zeigt eine schematische Schnittansicht einer erfindungsgemässen Mähmesservorrichtung 100 aufweisend ein Doppelmesser-Schneidsystem 111 und einen Messerbalken 110, wobei der Messerbalken 110 mittels Haltevorrichtungen (nicht gezeigt) mit dem Doppelmesser-Schneidsystem 111 verbunden ist. Das Doppelmesser-Schneidsystem 111 ist symmetrisch um eine Messerebene 150 angeordnet; der Messerbalken 110 befindet sich weiterhin auf Höhe des Doppelmesser-Schneidsystems 111. In Richtung einer zur Messerebene 150 orthogonalen Achse 170 weist der Messerbalken eine erste Ausdehnung 112 auf. An einen Spalt 160 zwischen dem Messerbalken 110 und dem Doppelmesser-Schneidsystem 111 angrenzende Abschnitte des Messerrückens 144,184 sind in Richtung der orthogonalen Achse 170 symmetrisch im Hinblick auf die Messerebene 150 gebogen. Die in **Fig. 2** gezeigten Messerrücken 144,184 sind dabei so gebogen, dass ein Abstand 113 zwischen überstehenden Teilen der gebogenen Messerrücken 144,184 grösser ist als die erste Ausdehnung 112 des Messerbalkens 110: hierdurch wird der Spalt 160 teilweise abgeschirmt. Die Biegung der an den Spalt 160 angrenzenden Abschnitte des Messerrückens 144,184 kann auch so ausgebildet sein, dass der Abstand 113 gleich gross ist wie die erste Ausdehnung 112. Der in **Fig. 2** eingezeichnete Biegewinkel 155 ist nur schematisch zu verstehen und kann zwischen 5° und 45° liegen und vorzugsweise gleich 15° sein.

**Fig. 3** zeigt eine perspektivische Ansicht einer erfindungsgemässen Mähmesservorrichtung 100, aufweisend ein Doppelmesser-Schneidsystem 111, einen Messerbalken 110 und Haltevorrichtungen 115 zum Verbinden des Messerbalkens 110 mit dem Doppelmesser-Schneidsystem 111, wobei zwischen dem Doppelmesser-Schneidsystem 111 und dem Messerbalken 110 ein Spalt 160 vorliegt. Wie in **Fig. 3** schematisch mit Hilfe der gestreiften Bereiche dargestellt, ist der Messerrücken 144 des oberen Schneidmessers 140 in einem an den Spalt 160 angrenzenden Abschnitt nach oben gebogen und der Messerrücken 184 des unteren Schneidmessers 180 in dem an den Spalt 160 angrenzenden Abschnitt nach unten gebogen. Die Biegung der an den Spalt 160 angrenzenden Abschnitte der Messerrücken 144,184 verläuft gleichförmig entlang der gesamten Breite des Doppelmesser-Schneidsystems 111.

## Patentansprüche

1. Mähmesservorrichtung (100), aufweisend:
ein Doppelmesser-Schneidsystem (111), wobei das Doppelmesser-Schneidsystem (111) ein oberes Schneidmesser (140) und ein unteres Schneidmesser (180) aufweist, welche translatorisch relativ zueinander bewegbar ausgebildet sind,
wobei das obere Schneidmesser (140) und das untere Schneidmesser (180) jeweils mehrere Klingenelemente (145) und einen Messerrücken (144,184) aufweist, wobei die Klingenelemente (145) über den Messerrücken (144, 184) miteinander verbunden ausgebildet sind und im Wesentlichen in einer Messerebene (150) angeordnet sind,
einen Messerbalken (110), der in Richtung einer zur Messerebene (150) orthogonalen Achse (170) eine erste Ausdehnung (112) aufweist und der dazu ausgebildet ist, das Doppelmesser-Schneidsystem (111) zu halten, wobei zwischen dem Messerbalken (110) und dem Doppelmesser-Schneidsystem (111) ein Spalt (160) angeordnet ist, wobei ein Abschnitt des Messerrückens (144,184) an den Spalt (160) angrenzt,
**dadurch gekennzeichnet, dass**
der an den Spalt (160) angrenzende Abschnitt des Messerrückens (144,184) in Richtung der orthogonalen Achse (170) gebogen ist.

2. Mähmesservorrichtung (100) gemäss Anspruch 1, wobei der Messerbalken (110) auf Höhe des Doppelmesser-Schneidsystems (111), insbesondere symmetrisch um die Messerebene (150) herum, angeordnet ist, und/oder wobei der an den Spalt (160) angrenzende Abschnitt des Messerrückens (144) des oberen Schneidmessers (140) und der an den Spalt (160) angrenzende Abschnitt des Messerrückens (184) des unteren Schneidmessers (180) im Wesentlichen symmetrisch im Hinblick auf die Messerebene (150) gebogen sind.

3. Mähmesservorrichtung (100) gemäss Anspruch 1 oder 2, wobei der an den Spalt (160) angrenzende Abschnitt des Messerrückens (144,184) entlang einer gesamten Breite des Doppelmesser-Schneidsystems (111), insbesondere gleichförmig, gebogen ist.

4. Mähmesservorrichtung (100) gemäss einem der vorherigen Ansprüche, wobei der an den Spalt (160) angrenzende Abschnitt des Messerrückens (144,184) so gebogen ist, dass ein Abstand (113) zwischen einem überstehenden Teil des gebogenen Messerrückens (144) des oberen Schneidmessers (140) und einem überstehenden Teil des gebogenen Messerrückens (184) des unteren Schneidmessers (180) in Richtung der orthogonalen Achse zumindest der ersten Ausdehnung (112) des Messerbalkens (110) entspricht.

5. Mähmesservorrichtung (100) gemäss einem der vorherigen Ansprüche, wobei der gebogene Abschnitt des Messerrückens (144,184) flach ausgebildet ist und zur Messerebene (150) einen Biegewinkel (155) zwischen 5° und 45°, vorzugsweise 15°, aufweist.

6. Mähmesservorrichtung (100) gemäss einem der vorherigen Ansprüche, wobei jedes Klingenelement zwei strikt konvex ausgebildete Begrenzungen (148) mit daran angeordneten Schneidkanten (147) aufweist, wobei sich die Schneidkante (147) eines Klingenelements (145) und die gegenüberliegende Schneidkante (147) eines benachbarten Klingenelements (145) kontinuierlich über den Messerrücken (144,184) erstrecken.

7. Mähmesservorrichtung (100) gemäss Anspruch 6, wobei jedes Klingenelement (145) um eine Mittellinie (149), die parallel zu einer Richtung von einer Klingenspitze (142) des Klingenelements (145) zum Messerbalken (110) verläuft, herum symmetrisch aufgebaut ist, wobei die zwei strikt konvex ausgebildeten Begrenzungen (148) im Bereich der Klingenspitze (142) im Wesentlichen parallel zur Mittellinie (149) verlaufen.

8. Mähmesservorrichtung (100) gemäss einem der Ansprüche 6 bis 7, wobei die Schneidkanten (147) flach ausgebildet sind.

9. Mähmesservorrichtung (100) gemäss einem der vorherigen Ansprüche, aufweisend einen Messerkopf zum Einleiten einer Antriebsbewegung eines seitlichen Antriebs (144) auf das Doppelmesser-Schneidsystem (111), wobei der Messerkopf an einem restlichen Abschnitt, der ausserhalb des gebogenen Abschnitts des Messerrückens (144) liegende Abschnitte des Messerrückens (144) umfasst, unmittelbar mit dem oberen Schneidmesser (140) fest verbunden ist, und insbesondere ohne zusätzliche Verstärkung fest verbunden ist.

10. Mähmesservorrichtung (100) gemäss einem der vorherigen Ansprüche, wobei der Messerrücken (144,184), in Richtung von einer Klingenspitze (142) des Klingenelements (145) zum Messerbalken (110), eine Ausdehnung von wenigstens 10 mm, vorzugsweise 33 mm, aufweist, wobei der gebogene Abschnitt des Messerrückens (144,184), in der Richtung von einer Klingenspitze (142) des Klingenelements (145) zum Messerbalken (110), eine Ausdehnung von wenigstens 5 mm, vorzugsweise der Hälfte der Ausdehnung des Messerrückens (144,184), aufweist.

11. Mähmesservorrichtung (100) gemäss einem der vorherigen Ansprüche, wobei das obere Schneidmesser (140) und/oder das untere Schneidmesser (180) einstückig, insbesondere aus einem Flachstahl gefertigt und anschliessend gebogen, ausgebildet ist.

12. Mähmesservorrichtung (100) gemäss einem der vorherigen Ansprüche, wobei die restlichen Abschnitte des oberen Schneidmessers (140) und des unteren Schneidmessers (180) ausserhalb der gebogenen Abschnitte des Messerrückens (144,184) im Wesentlichen flach ausgebildet sind.
